# EUROPEAN PATENT SPECIFICATION

(11) **EP 2 321 600 B1**
(45) Date of publication and mention of the grant of the patent: **25.09.2013**
(21) Application number: 09784762.8
(22) Date of filing: 24.07.2009
(51) Int. Cl.: F25J 3/06, C01B 3/50

(54) **SEPARATION OF CARBON DIOXIDE AND HYDROGEN**
TRENNUNG VON KOHLENDIOXID UND WASSERSTOFF
Séparation de dioxyde de carbone et d'hydrogène

(30) Priority: 31.07.2008 EP 08252610
(43) Date of publication of application: 18.05.2011
(73) Proprietor: BP Alternative Energy International Limited, Sunbury on Thames, Middlesex TW16 7BP (GB)
(72) Inventor: HUDA, Badrul, Surrey GU22 9LZ (GB); FORSYTH, Jonathan, Alec, Berkshire RG14 1RN (GB); KOBAYASHI, Masahiro, Hiroshima 731 3167 (JP); MORI, Yasushi, Hiroshima 733-0844 (JP)
(74) Representative: Stephen, Robert John
(86) International application number: PCT/GB2009/001810
(87) International publication number: WO 2010/012981

(56) References cited:
- EP-A- 0 503 910
- WO-A-2008/099357
- WO-A-2009/013455
- FR-A- 2 884 305
- US-A- 3 614 872
- US-A1- 2006 260 189
- US-A1- 2007 221 541
- US-B1- 6 301 927

## Description

This invention relates to the recovery of carbon dioxide and hydrogen in a concentrated form from a synthesis gas stream comprising hydrogen and carbon dioxide thereby generating a carbon dioxide stream that may be used in a chemical process, or may be sequestered or used for enhanced oil recovery before being ultimately sequestered, and a hydrogen rich stream that may be used as fuel for a power plant thereby generating electricity or as fuel for a low pressure burner of a fired heater, or as fuel for a reformer or boiler or as a refinery feed stream for upgrading of one or more refinery streams or as a hydrogen feed to a chemical process.

US 3,614,872 relates to an autorefrigeration process for separating a shifted synthesis gas feedstream into an enriched carbon dioxide product stream and an enriched hydrogen product stream comprising the steps of:
(1) cooling the shifted synthesis gas feedstream stepwise at superatmospheric pressure by noncontact counter flow heat exchange in a plurality of separate cooling zones, and where in each separate cooling zone one or two streams of coolant of different compositions which are produced subsequently in the process is passed in heat exchange relationship with one stream of synthesis gas feed thereby cooling the synthesis gas feedstream to a temperature below the dew point at the pressure of the synthesis gas feedstream, and where in at least one of the separate cooling zones, the synthesis gas flows in split streams, each split stream of which is cooled by separate product streams of different compositions out of heat exchange with each other, and separating in a gas-liquid separation zone a liquefied enriched carbon dioxide product stream and a gaseous enriched hydrogen product stream;
(2) withdrawing at least a portion of said liquefied enriched carbon dioxide product stream from the separation zone in (1), expanding at substantially the temperature at which it is removed from separation zone and passing said expanded portion through at least one cooling zone in (a) as one of said stream of coolant at reduced pressure relative to said separation zone, and removing the enriched carbon dioxide product stream departing form (1) is gaseous phase at a temperature higher than that in said separation zone;
(3) simultaneously withdrawing at least a portion of said gaseous enriched hydrogen product stream from the separation zone of (a) and passing said portion as said other stream of coolant through at least one cooling zone in (a) which is separate and distinct from any cooling zone cooled in (2) by said first stream of coolant; and
(4) withdrawing the gaseous enriched hydrogen product stream from (3) at a temperature higher than the temperature in said separation zone.

According to the description of US 3,614,872, the dried feed gas enters the separating portion of the system at substantially initial line pressure, that is a pressure of about 1400 psig (96.5 barg). It is also said that at start-up, back pressure valve 20 is closed and the enriched hydrogen product stream from the top of separator 19 is reduced in pressure from 1400 psig to about 140 psig (9.65 barg) by being passed across an expansion valve. By expansion across the valve, the temperature of this gaseous stream is dropped to -78°F without solid formation. The cooled enriched hydrogen product gas is then used as internal refrigerant in cooler 13. It is also said that higher refrigeration efficiencies are possible if the compressed hydrogen enriched product gas instead of being expanded at constant enthalpy through a valve, is expanded at constant entropy; that is, the gas is made to operate an expansion engine or move the rotor of a turbo-electric generator. However, after start-up, it may no longer be necessary to supply refrigerant to cooler 13 at a temperature of -78°F. Accordingly, the hydrogen enriched product gas may by-pass the expansion valve and is introduced into the cooler 13 at a temperature of about -55 to -65°F. This scheme is said to avoid the large pressure drop previously experienced across the expansion valve.

It has now been found that by pressurising the synthesis gas stream in a compression system to a pressure in the range of 150 to 400 barg and then passing the compressed synthesis gas feed stream through a heat exchanger system in heat exchange relationship with a plurality of internal refrigerant streams that are produced subsequently in the process, that the high pressure synthesis gas stream that exits the heat exchanger system may be cooled to a temperature in the range of -15 to -55°C. It has also been found that the cooled high pressure (HP) synthesis gas that exits the heat exchanger system may be separated in a gas-liquid separator vessel with negligible pressure drop across the heat exchanger system and separator vessel thereby forming a HP hydrogen rich vapour stream and a HP liquid carbon dioxide stream with the separation achieving 75% to 95% capture of the CO₂ from the synthesis gas feed stream. It has also been found that the hydrogen rich vapour stream may be reduced in pressure to any desired pressure by passing the HP hydrogen enriched vapour stream through a turboexpansion system that comprises a plurality of turboexpanders arranged in series. In particular, the hydrogen rich vapour stream may be obtained at the desired fuel gas feed pressure for a combustor of a gas turbine of a power plant (for example, at a pressure of 30 barg). It has also been found that the expanded H₂ rich vapour streams that exit each turboexpander of the series may be used as internal refrigerant streams thereby providing a major portion of the refrigeration duty for the heat exchanger system. Preferably, expansion of the H₂ rich vapour in the turboexpanders may be used to drive a rotor or shaft of the compressor(s) of the compressor system or to drive the rotor or shaft of a turbo-electric generator thereby achieving a net power consumption for the separation of the synthesis gas stream into a hydrogen rich vapour stream and liquid CO₂ stream of less than 30 MW, preferably, less than 25 MW when processing 28,000 kmol/hour of syngas containing 56 mol% hydrogen and 43 mol% CO₂.

Thus, according to the present invention there is provided a process for separating a synthesis gas stream into a hydrogen (H₂) rich vapour stream and a liquid carbon dioxide (CO₂) stream in a CO₂ condensation plant according to claim 1.

The machine that is driven by the turboexpanders in step (D) is preferably a compressor of the compression system and/or a pump (for example, for pumping liquid CO₂ or supercritical CO₂), Where the turboexpanders are used to drive an alternator of an electric generator, the electricity is preferably used to power one or more components of the CO₂ condensation plant.

Preferably, the cooled HP synthesis gas stream formed in step (B) is passed to a cryogenic separation system comprising at least one cryogenic separation stage wherein the cryogenic separation stage(s) is comprised of a heat exchanger that employs an external refrigerant and a gas-liquid separator vessel. Accordingly, the gas-liquid separator vessel employed in step (C) of the present invention may be either the gas-liquid separator vessel of a single cryogenic separation stage that employs an external refrigerant or is the final gas-liquid separator vessel of a series of cryogenic separation stages wherein the cryogenic separation stages each employ an external refrigerant and are operated at progressively lower temperatures.

An advantage of the process of the present invention is that at least 75%, preferably, at least 90%, more preferably, at least 95% of the carbon dioxide is separated from the synthesis gas feed stream with the carbon dioxide capture level being dependent upon the pressure of the HP synthesis gas stream and on whether the cooled synthesis gas stream formed in step (B) is subjected to cryogenic cooling against an external refrigerant. Thus, it has been found that 75 to 85% of the CO₂ may be captured from the synthesis gas feed stream if the cooled HP synthesis gas stream that is formed in step (B) is passed directly to a gas-liquid separator vessel without being subjected to cryogenic cooling against an external refrigerant (the CO₂ capture level increasing with increasing compression of the synthesis gas feed stream). The person skilled in the art will understand that the CO₂ capture level increases with increasing compression of the synthesis gas feed stream above the minimum pressure of 150 barg. The person skilled in the art will also understand that the CO₂ capture level will depend on the temperature to which the HP synthesis gas stream is cooled in the heat exchanger system and optional cryogenic separation system.

A further advantage of the present invention is that typically, at least 98%, preferably, at least 99%, more preferably, at least 99.5%, in particular, at least 99.8% of the hydrogen is recovered in the H₂ rich vapour stream. Yet a further advantage of the process of the present invention is that the hydrogen rich vapour stream that is separated in step (C) is at a pressure substantially, above the minimum fuel gas feed pressure (inlet pressure) for a combustor(s) of at least one gas turbine(s) of a power plant. Accordingly, the HP hydrogen rich vapour stream may be reduced in pressure in step (D) to the desired inlet pressure for the combustor(s) of the gas turbine(s) by isentropically expanding the HP hydrogen rich vapour stream in a series of turboexpanders thereby providing cold H₂ rich vapours streams (internal refrigerant streams) that may be used to cool the HP synthesis gas stream in step (B). In addition, isentropic expansion of the hydrogen rich vapour streams in each of the turboexpanders of the series generates motive power that may be used to drive the compressor(s) of the compression system and/or to drive at least one alternator of an electric generator thereby generating electricity for use in the process (for example, for operating one or more electric compressors of the compression system) and/or to drive a pump (for example, a pump for a liquid CO₂ or supercritical CO₂ stream). Thus, a major portion of the compression energy may be recovered using the turboexpanders thereby increasing the overall energy efficiency of the process. However, it is recognised that there will be energy losses and that additional power will be required to run the compressors of the compression system. It is also recognised that the HP hydrogen rich vapour stream may be expanded to pressures below the inlet pressure of the combustor of a gas turbine, if the hydrogen rich vapour stream is to be used for a different purpose, for example, as fuel for a low pressure burner of a fired heater, or as fuel for a reformer or boiler or as a refinery feed stream for upgrading of one or more refinery streams or as a hydrogen feed to a chemical process.

The synthesis gas feed stream may be generated from a solid fuel such as petroleum coke or coal in a gasifier or from a gaseous hydrocarbon feedstock in a reformer. The synthesis gas from the gasifier or reformer may contain high amounts of carbon monoxide. Accordingly, depending on the desired composition of the hydrogen rich vapour stream, the synthesis gas may be treated in a shift converter unit where substantially all of the carbon monoxide contained in the synthesis gas stream is converted to carbon dioxide over a shift catalyst according to the water gas shift reaction (WGSR)

CO + H₂O → CO₂ + H₂.

The shift converter unit may be a single shift reactor containing a shift catalyst. However, it is preferred that the shift converter unit comprises a high temperature shift reactor containing a high temperature shift catalyst and a low temperature shift reactor containing a low temperature shift catalyst. The water gas shift reaction is exothermic and results in a significant temperature rise across the shift converter unit. Accordingly, the shift converter unit may be cooled by continuously removing a portion of the shifted synthesis gas stream and cooling this stream by heat exchange with one or more process streams, for example against boiler feed water or against steam (for the generation of superheated steam). The synthesis gas that exits the shift converter unit comprises primarily hydrogen, carbon dioxide and steam and minor amounts of carbon monoxide and methane. Where the synthesis gas is of sufficiently high CO₂ content, the shift conversion step may be omitted, in which case the synthesis gas comprises primarily hydrogen, carbon dioxide, carbon monoxide, and steam and minor amounts of methane.

Typically, the synthesis gas stream is cooled to a temperature in the range of 30 to 50°C, for example, about 40°C, upstream of the CO₂ condensation plant, by heat exchange with at least one cold process stream, to condense out a condensate (predominantly comprised of water). Typically, the cold process stream is a process stream used during the generation of the synthesis gas. The condensate is then separated from the cooled synthesis gas stream, for example, in a condensate drum.

Where the synthesis gas stream is formed by gasification of petroleum coke or coal in a gasifier, the synthesis gas that exits the gasifier will also comprise minor amounts of hydrogen sulfide (H₂S) as an impurity (sour synthesis gas). The H₂S impurity is formed by reaction of COS with steam in the shift converter unit. This H₂S may be captured upstream of the CO₂ condensation plant, for example, by selectively absorbing the H₂S from the sour synthesis gas in an absorption tower. Typically, Selexol™ (a mixture of dimethyl ethers of polyethylene glycol) may be employed as the absorbent. Any H₂S that is captured may be either converted into elemental sulphur using the Claus Process or into industrial strength sulphuric acid. Alternatively, the sour synthesis gas stream may be fed to the CO₂ condensation plant of the present invention where a major portion of the H₂S partitions into the liquid CO₂ phase and may therefore be sequestered with the CO₂. Typically, greater than 95% of the H₂S that was contained in the synthesis gas feed stream partitions into the liquid CO₂ phase. Any residual H₂S in the final H₂ rich vapour stream may be removed downstream of the CO₂ condensation plant by passing the final H₂ rich vapour stream through an adsorbent bed, for example, a zinc oxide bed, or by passing the final H₂ rich vapour stream through a scrubber that utilises a suitable liquid absorbent. There is minimal pressure drop, for example, a pressure drop of less than 0.5 bar across the absorbent bed.

After removal of any condensate (see above), the synthesis gas stream is preferably dried prior to being passed to the CO₂ condensation plant, as any moisture in the synthesis gas will freeze and potentially cause blockages in the plant. The synthesis gas stream may be dried by being passed through a molecular sieve bed or an absorption tower that employs a solvent, for example, triethylene glycol, to selectively absorb the water. Preferably, the dried synthesis gas stream has a water content of less than 1 ppm (on a molar basis).

Typically, the dried synthesis gas comprises at least 40 mole % H₂, preferably, at least 50 mole% H₂, in particular, 55 to 60 mole % H₂.

The synthesis gas stream is then fed to the compression system of the CO₂ condensation plant at a pressure in the range 10 to 120 barg, preferably, 20 to 95 barg, more preferably, 40 to 75 barg, in particular, 40 to 60 barg. The temperature at which the synthesis gas is fed to the compression system of the CO₂ condensation plant is not critical. However, it is preferred that the synthesis gas stream is fed to the compression system of the CO₂ condensation plant at a temperature in the range of 25 to 50°C, for example, 30 to 40°C. The synthesis gas stream is then compressed, in the compression system, to a pressure in the range of 150 to 400 barg, preferably, 175 to 360 barg, more preferably, 250 to 360 barg, most preferably 300 to 360 barg, in particular, 330 to 360 barg. Preferably, the compression system is a multistage compressor system comprising a plurality of compressors arranged in series. However, where the synthesis gas stream is compressed to lower pressures, for example, pressures in the range of 150 to 200 barg, preferably, 150 to 180 barg, a single stage of compression may be employed. Thus, a multistage compression system is preferred for higher discharge pressures from the compression system and is optional for lower discharge pressures from the compression system. Generally, the compressor(s) of the compression system is mounted on a shaft that may be driven by an electric motor, gas turbine or steam turbine. Alternatively, the compressor(s) of the compression system and the turboexpanders of the turboexpansion system may be mounted on a common shaft so that the isentropic expansion of the hydrogen rich vapour in the turboexpanders may be used to drive the compressor(s).

A typical multistage compression system for use in the process of the present invention comprises at least one low pressure (LP) compressor, preferably two or three LP compressors mounted on a common drive shaft and at least one high pressure (HP) compressor, preferably one or two HP compressors mounted on a further common drive shaft (the drive shafts may be connected via a gear system). The LP and HP compressors are arranged in series. As would be well known to the person skilled in art, increased compression efficiency is achieved by balancing the compression duty across the compressors of the series. Thus, it is preferred that the compression ratios between successive compressors of the series are substantially the same.

Typically, the compressed HP synthesis gas stream is cooled to remove at least part, preferably, substantially all of the heat of compression before being passed through the heat exchanger system thereby reducing the cooling duty for the heat exchanger system. Where there is a single stage of compression, at least part of the heat of compression is removed from the HP synthesis gas by passing the HP synthesis gas stream through at least one heat exchanger of the compression system in heat exchange relationship with an external coolant and/or an external refrigerant. Where there are a plurality of stages of compression, it is preferred that the multistage compression system is provided with at least one interstage heat exchanger where the compressed gas is cooled against an external coolant and/or refrigerant before being passed to the next compressor in the series. Preferably, interstage heat exchangers are provided between each compressor in the series. The multistage compression system is also provided with at least one heat exchanger after the final stage of compression where the HP synthesis gas stream is cooled against an external coolant and/or an external refrigerant before being passed to the heat exchanger system. Typically, the compressed HP synthesis gas stream from the final stage of compression may be passed through a first heat exchanger in heat exchange relationship with an external coolant and then through a second heat exchanger in heat exchange relationship with an external refrigerant, prior to being passed to the heat exchanger system. Suitable external coolants for use in the heat exchanger(s) of the compression system include air, water, or a cold process stream such as the H₂ rich vapour stream formed in step (C) or the final H₂ rich vapour stream that is exported from the process of the present invention. Suitable external refrigerants for use in the heat exchanger of the compression system include propane, propenes and ammonia.

Where the HP synthesis gas that exits the compression system has not been heat exchanged with an external refrigerant, the HP synthesis gas typically exits the compression system at a temperature in the range of 20 to 50°C, in particular, 25 to 40°C. Where the HP synthesis gas that exits compression system has been heat exchanged with an external refrigerant, the HP synthesis gas typically exits the compression system at a temperature in the range of 0 to -30°C, for example, 0 to -10°C.

The HP synthesis gas stream is then passed through the heat exchanger system of the CO₂ condensation plant where the HP synthesis gas stream is cooled against a plurality of internal refrigerant streams i.e. cold process streams that are produced subsequently in the process. The internal refrigerant streams may be selected from cold hydrogen rich vapour stream(s), in particular, cold expanded hydrogen rich vapour stream(s) from the turboexpanders of the turboexpansion system, and liquid CO₂ stream(s). Typically, the HP synthesis gas stream is cooled in the heat exchanger system to a temperature in the range - 15 to -55°C, preferably, -25 to -50°C, for example, -35 to -40°C. Typically, there is minimal pressure drop across the heat exchanger system, for example, a pressure drop of less than 1.5 bar, preferably, less than 1.0 bar.

Typically, the heat exchanger system comprises at least one multichannel heat exchanger with the HP synthesis gas stream being passed through a channel of the multichannel heat exchanger in heat exchange relationship with a plurality of internal refrigerant streams that are passed through further channels in the multichannel heat exchanger. Representative examples of the multichannel heat exchanger include those described in US 6622519, WO 2004/016347, EP 212878 and EP 292245. As an alternative to pre-cooling the HP synthesis gas stream against an external refrigerant in a heat exchanger of the compression system, it is envisaged that one or more external refrigerant streams may be passed through yet further channels in the multichannel heat exchanger thereby providing additional cooling duty for the HP synthesis gas stream. Preferably, the HP synthesis gas stream is passed in a counter-current direction through the multichannel heat exchanger to the internal refrigerant streams and optional external refrigerant stream(s). Preferably, the heat exchanger system comprises a plurality of refrigeration stages arranged in series where each stage in the series comprises either (i) a single multichannel heat exchanger, or (ii) a plurality of multichannel heat exchangers arranged in parallel, for example, 2 or 3 multichannel heat exchangers arranged in parallel. Typically, the heat exchanger system comprises three refrigeration stages arranged in series with the internal refrigerant streams and optional external refrigerant stream(s) being fed to each successive stage of the series at successively lower temperatures. In a preferred heat exchanger system, a first refrigeration stage comprises two single-pass multichannel heat exchangers arranged in parallel, a second refrigeration stage comprises three 3-pass multichannel heat exchangers arranged in parallel, and a third refrigeration stage comprises a single 4-pass multichannel heat exchanger. Thus, the HP synthesis gas stream is divided and recombined as it passes through the stages of the heat exchanger system thereby optimising the heat exchange with the internal refrigerant streams and/or external refrigerant stream(s). However, alternative arrangements for a plurality of multichannel heat exchangers may be adopted.

Alternatively, the heat exchanger system may comprise a plurality of refrigeration stages wherein each refrigeration stage comprises either a single stand-alone heat exchanger or a plurality of stand-alone heat exchangers arranged in parallel. Thus, the HP synthesis gas stream is cooled as it is passed through the refrigeration stages of the heat exchanger system by heat exchange with a plurality of internal refrigerant streams and optional external refrigerant stream(s) that are fed to the stand-alone heat exchanger(s) of each successive refrigeration stage at successively lower temperatures. It is preferred that the HP synthesis gas stream is passed through the stand-alone heat exchangers in a counter-current direction to the internal refrigerant streams and optional external refrigerant stream(s) that are fed to the stand-alone heat exchangers.

It is also envisaged that the heat exchanger system may comprise both multichannel and stand-alone heat exchangers. Thus, the heat exchanger system may comprise a plurality of refrigeration stages arranged in series wherein each refrigeration stage comprises (i) a single multichannel heat exchanger, or (ii) a single stand-alone heat exchanger, or (iii) a plurality of multichannel heat exchangers and/or a plurality of stand-alone heat exchangers arranged in parallel.

The multichannel heat exchanger(s) of the heat exchanger system may be of the type employed in processes for generating liquefied natural gas such as a brazed aluminium plate-fin heat exchanger or a diffusion-bonded heat exchanger (for example, a printed circuit heat exchanger (PCHE) as supplied by Heatric). Alternatively, the multichannel heat exchanger(s) may be a multiple body shell and tube heat exchanger comprising either (a) a tube arranged in the shell of the heat exchanger wherein the shell of the heat exchanger comprises a plurality of compartments and wherein the HP synthesis gas stream is passed through the tube and an internal refrigerant stream or external refrigerant stream is passed through each compartment of the shell in heat exchange relationship with the HP synthesis gas that is flowing through the tube; or (b) a plurality of tubes arranged in the shell of the heat exchanger wherein the shell comprises a single compartment and the HP synthesis gas is passed through the compartment and an internal refrigerant stream or an external refrigerant stream is passed through each of the tubes in heat exchange relationship with the HP synthesis gas that is flowing through the single compartment of the shell. Accordingly, the term "channel" encompasses the channels formed between the plates of a brazed aluminium plate-fin heat exchanger or a diffusion-bonded heat exchanger and also the compartment(s) and tube(s) of a multiple body shell and tube heat exchanger.

The stand-alone heat exchanger(s) of the compression system may be of the shell and tube type (a single body shell and tube heat exchanger) with the HP synthesis gas stream passing through the tube side and an internal refrigerant stream or external refrigerant stream passing through the shell side of the heat exchanger or vice versa. However, a process that employs stand-alone heat exchangers to pre-cool the HP synthesis gas stream may be of reduced efficiency compared with a process that employs a multichannel heat exchanger, in whole or in part, to cool the HP synthesis gas stream in step (B) of the present invention.

The cooled HP synthesis gas stream that exits the heat exchanger system is a two phase stream comprised of a liquid phase and vapour phase. There is a limit on the temperature to which the HP synthesis gas stream may be cooled in the heat exchanger system as the temperature must be maintained above a value where solid CO₂ will form. This typically occurs at a temperature of -56°C (the triple point for pure CO₂ is at 5.18 bar and at a temperature of -56.4°C) although the presence of H₂ may depress this freezing point. The amount of cooling that is achieved in the heat exchanger system owing to heat exchange with the plurality of internal refrigerant streams will be dependent upon the amount of cooling of the isentropically expanded hydrogen rich vapour streams that is achieved in the turboexpansion system which, in turn, is dependent on the pressure of the HP hydrogen rich vapour stream that is formed in step (C) and the pressure of the H₂ rich vapour stream that exits the final turboexpander of the turboexpansion system in step (D). The amount of electricity generated by the turboexpanders of the turboexpansion system will also be dependent on the extent to which the hydrogen rich vapour is subjected to isentropic expansion in the turboexpansion system which is also dependent on the pressure of the H₂ rich vapour stream formed in step (C) and the pressure of the H₂ rich vapour stream that exits the final turboexpander of the turboexpansion system in step (D).

The cooled synthesis gas stream from the heat exchanger system may be passed directly to a gas-liquid separator vessel that is preferably operated at substantially the same pressure as the heat exchanger system. Thus, the pressure drop across the separator vessel is typically in the range of 0.1 to 5 bar, preferably, 0.1 to 1 bar, in particular, 0.1 to 0.5 bar. Accordingly, a HP hydrogen rich vapour phase is withdrawn from at or near the top of the gas-liquid separator vessel and is passed to the turboexpander system while a HP liquid CO₂ stream is withdrawn from at or near the bottom of the gas-liquid separator vessel. If necessary, the HP liquid CO₂ stream is reduced in pressure to the desired export pressure for the liquid CO₂ product stream (as described below).

Where relatively high carbon capture levels are desired, for example, greater than 90%, preferably, greater than 95% CO₂ capture from the synthesis gas feed stream (based on the molar composition of the synthesis gas feed stream), and insufficient cooling of the HP synthesis gas has been achieved in the compression system and heat exchanger system, the cooled HP synthesis gas that exits the heat exchanger system may be passed to a cryogenic separation system of the CO₂ condensation plant wherein the cryogenic separation system comprises at least one cryogenic separation stage. The cryogenic separation stage(s) comprises a heat exchanger that employs an external refrigerant and a gas-liquid separator vessel. The cryogenic separation system is operated without any substantial reduction in pressure across the cryogenic separation stage(s). Where the cryogenic separation system comprises a single cryogenic separation stage, a HP hydrogen rich vapour stream and a HP liquid CO₂ stream are formed by: (i) passing the cooled HP synthesis gas that exits the heat exchanger system through the heat exchanger of the single cryogenic separation stage where it is cooled against an external refrigerant, (ii) passing the resulting cooled HP stream to the separator vessel of the single cryogenic separation stage where a H₂ rich vapour phase separates from a liquid CO₂ phase, and (iii) withdrawing a HP hydrogen rich vapour stream and a HP liquid CO₂ stream from the separator vessel of the single cryogenic separation stage. Where the desired carbon dioxide capture level cannot be achieved using a single cryogenic separation stage, a HP hydrogen rich vapour stream and a plurality of HP liquid CO₂ streams are formed by: (i) passing the cooled HP synthesis gas that exits the heat exchanger system through the first heat exchanger of a multistage cryogenic separation system where it is cooled against an external refrigerant, (ii) passing the resulting cooled HP stream to the separator vessel of the first cryogenic separation stage where a H₂ rich vapour phase separates from a liquid CO₂ phase, (iii) withdrawing a HP hydrogen rich vapour stream and a HP liquid CO₂ stream from the separator vessel of the first cryogenic separation stage, (iv) passing the HP hydrogen rich vapour stream through the heat exchanger of a further cryogenic separation stage where it is cooled against a further external refrigerant to below its dew point thereby forming a cooled two phase stream, (v) passing the cooled two phase stream to the separator vessel of the further cryogenic separation stage where a hydrogen rich vapour phase separates from a liquid CO₂ phase, and (vi) withdrawing a HP hydrogen rich vapour stream and a HP liquid CO₂ stream from the separator vessel of the further separation stage and (vii) if necessary, repeating steps (iv) to (vi) by passing the HP hydrogen rich vapour stream through one or more further cryogenic separation stages until the desired CO₂ capture has been achieved. Accordingly, the HP hydrogen rich vapour stream is removed from the gas-liquid separation vessel of the final cryogenic separation stage of the series.

Where the HP synthesis gas stream is cooled in the heat exchanger system to a temperature in the range of -30 to -40°C, for example, about -37°C, the cryogenic separation system may comprise a single cryogenic separation stage having an operating temperature in the range of -40 to -55°C, preferably, -45 to -50°C. Where the HP synthesis gas stream exits the heat exchanger system is at a higher temperature, for example, a temperature in the range of -15 to greater than -30°C, the cryogenic separation system may comprise a plurality of cryogenic separation stages that are arranged in series with the separator vessels of the cryogenic separation stages operated at successively lower temperatures. The operating temperature of each cryogenic separation stage will depend on the temperature to which the HP synthesis gas stream has been cooled in the heat exchanger system, the number of cryogenic separation stages and the desired carbon dioxide capture level. There is a limit on the lowest temperature in the final cryogenic separation stage, as the temperature must be maintained above a value where solid CO₂ will form (see above). Generally, the final cryogenic separation stage is operated at a temperature in the range of -40 to -55°C, preferably, -45 to -50°C.

Suitable external refrigerants that may be used as refrigerant in the heat exchanger(s) of the cryogenic separation stages(s) include propanes, ethane, ethylene, ammonia, hydrochlorofluorocarbons (HCFC's) and mixed refrigerants. Typical mixed refrigerants comprise at least two refrigerants selected from the group consisting of butanes, propanes, ethane, and ethylene. These refrigerants may be cooled to the desired refrigeration temperature in external refrigerant circuits using any method known to the person skilled in the art including methods known in the production of liquefied natural gas. These refrigerants may also be cooled to the desired refrigeration temperature by heat exchange with one or more cold isentropically expanded H₂ rich vapour streams from the turboexpanders of the turboexpansion system. The external refrigerant for the cryogenic separation stage is selected so as to achieve the desired operating temperature. For example, propane may be used as refrigerant when the feed temperature of the HP synthesis gas stream is in the range of -15 to greater than -30°C and the desired operating temperature of the cryogenic separation stage is in the range of -20 to greater than -30°C while ethane and/or ethylene may be used as external refrigerant when the feed temperature of the HP synthesis gas stream is in the range of -30 to -40°C and the desired operating temperature for the cryogenic separation stage is in the range of -40 to -55°C, preferably, -45 to -50°C.

As discussed above, the cryogenic separation system is operated with minimal pressure drop across the cryogenic separation stage or stages of the system. Typically, the pressure drop across the cryogenic separation system is in the range of 1 to 5 bar, preferably, 1 to 3 bar, in particular, 1 to 2 bar. Thus, where there are a plurality of cryogenic separation stages, these may be operated at substantially the same pressure. However, higher pressure drops across the cryogenic separation system may be tolerated, for example, pressure drops in the range of 5 to 20 bar, preferably 5 to 10 bar.

Preferably, prior to being fed to the turboexpansion system, the HP hydrogen rich vapour stream formed in step (C) is used to cool the HP synthesis gas stream in step (B) by passing the cold HP hydrogen rich vapour stream through a further channel in a multichannel heat exchanger (or through a stand-alone heat exchanger) in heat exchange relationship with the HP synthesis gas stream. Alternatively the HP hydrogen rich vapour stream may be used as coolant for the heat exchanger(s) of the compression system.

In a another preferred embodiment the HP H₂ rich vapour stream is first fed to a solvent extraction system in which the vapour stream is contacted with a solvent which absorbs any residual CO₂ contained therein. Solvent extraction processes for effecting this separation include the Rectisol^{™} and Selexol^{™} processes which respectively uses refrigerated methanol and a refrigerated mixture of dimethyl ethers of polyethylene glycol as the absorbent. Alternatively the absorbent can be amine based for example monoethanolamine, diethanolamine, methyldiethanolamine diisopropylamine or the like.

The HP H₂ rich vapour stream that is fed to the turboexpansion system is at elevated pressure. Accordingly, the H₂ rich vapour stream is reduced in pressure to the desired exit pressure by being passed through the turboexpansion system. The expansion energy recovered from the H₂ rich vapour streams in the turboexpanders can be used to drive an electric turbine or can be used to directly drive the compressors of the compressor system. As discussed above, isentropic expansion of the H₂ rich vapour stream results in significant cooling. Where one or more, preferably all, of the cold isentropically expanded hydrogen rich vapour streams that are withdrawn from the turboexpanders of the turboexpansion system are used to cool the HP synthesis gas stream in step (B), the operating pressures of the turboexpanders are set to optimise the expander efficiency and to ensure the discharge temperatures for the expanded H₂ rich vapour streams do not fall below -56°C (the freezing point of CO₂). Typically, the discharge temperatures of the expanded streams are in the range of -15°C to -50°C, preferably, -20°C to -50°C, in particular, -30 to -50°C. However, it is also envisaged that one or more of the cold isentropically expanded hydrogen rich vapour streams may be used as an internal refrigerant for a different purpose, for example, to cool an external refrigerant (such as propane or ethane) that is employed in the process or to cool a non-isentropically expanded H₂ rich vapour stream so that it can be used as internal refrigerant in the process of the present invention. As there is no risk of forming solidified CO₂ when an internal refrigerant is used for these purposes, the discharge temperature of the expanded stream may be below -55°C.

Where the HP synthesis gas stream that exits the heat exchanger system is either passed directly to a gas-liquid separator vessel or is passed to a cryogenic separation system that comprises a single cryogenic separation stage, a single liquid CO₂ stream is obtained. Where the HP synthesis gas stream that exits the heat exchanger system is passed to a cryogenic separation system that employs a plurality of cryogenic separation stages, a separate liquid CO₂ stream will be obtained from each cryogenic separation stage. Preferably, the liquid CO₂ streams from the plurality of cryogenic separation stages are combined to form a combined liquid CO₂ stream. Where the liquid CO₂ stream or combined liquid CO₂ stream is obtained at the desired CO₂ export pressure (typically, 100 to 175 barg), the liquid CO₂ stream or combined liquid CO₂ stream is preferably used as internal refrigerant in the heat exchanger system thereby providing further cooling for the HP synthesis gas feed stream in step (B). The CO₂ product stream that exits the heat exchanger system is in a dense phase state. By "dense phase state" is meant that the CO₂ product stream is either in a supercritical fluid state or a liquid state depending upon whether the temperature of the CO₂ product stream is above or below its critical temperature. The dense phase CO₂ product stream is then exported from the process and sequestered and/or used in a chemical process.

Where the liquid CO₂ stream or the combined liquid CO₂ stream is produced at a pressure above the desired liquid CO₂ export pressure, the liquid CO₂ stream or the combined liquid CO₂ stream is reduced in pressure to the desired liquid CO₂ export pressure, typically, a pressure in the range of 100 to 175 barg. It is envisaged that the energy associated with reducing the pressure of the liquid CO₂ stream or the combined liquid CO₂ stream to export pressure may be recovered using a hydro turbine system. Alternatively, the liquid CO₂ stream or the combined liquid CO₂ stream may be flashed to lower pressure across a valve before being passed to a flash separation vessel (the valve may be located at the inlet to the flash separation vessel). Any H₂ rich vapour that separates from the liquid CO₂ stream owing to the reduction in pressure may be removed as a H₂ rich vapour stream from at or near the top of the flash separator vessel. The H₂ rich vapour stream that is withdrawn from the flash separator vessel may be combined with a similar pressure expanded H₂ rich vapour stream from one of the turboexpanders of the turboexpander system and the combined H₂ rich vapour stream is then used as an internal refrigerant stream in the heat exchanger system thereby providing cooling of the HP synthesis gas stream in step (B). For example, the combined H₂ rich vapour stream may be routed through a channel of a multichannel heat exchanger in heat exchange relationship with the HP synthesis gas stream. Alternatively, when further recovery of CO₂ from the H₂ rich vapour stream is desired, the H₂ rich vapour stream that is withdrawn from the flash separator vessel may be combined with a similar pressure compressor stream that exits one of the compressors of the compressor system. Preferably, the liquid CO₂ stream that is withdrawn from the flash separator vessel is used as an internal refrigerant in the heat exchanger system thereby providing further cooling for the HP synthesis gas stream in step (B). As described above, a dense phase CO₂ product stream (either supercritical CO₂ or liquid CO₂) exits the heat exchanger system. This dense phase CO₂ product stream is then exported from the process and sequestered and/or used in a chemical process. Thus, an advantage of the present invention is that the dense phase CO₂ product stream is produced at the desired CO₂ export pressure so that there is no requirement to provide additional CO₂ pumps.

The dense phase CO₂ product stream that is exported from the process of the present invention preferably comprises at least 95 mole % CO₂, in particular, at least 98 mole % CO₂, the remainder being mostly hydrogen with some inerts, for example, nitrogen and/or CO. However, where the synthesis gas feed stream is a sour synthesis gas, the dense phase CO₂ product stream will also comprise minor amounts of H₂S. Where the dense phase CO₂ product stream comprises H₂S, the product is either sequestered or the H₂S is removed prior to the CO₂ being used for a different purpose, such as a feed to a chemical process. Where the dense phase CO₂ product stream is sequestered, it is typically delivered to a pipeline that transfers the dense phase CO₂ product stream to a reception facility of an oil field where the dense phase CO₂ product stream may be used as an injection fluid for an oil reservoir. If necessary, the dense phase CO₂ product stream is pumped to above the pressure of the oil reservoir before being injected down an injection well and into the oil reservoir. The injected CO₂ displaces the hydrocarbons contained in the reservoir rock towards a production well for enhanced recovery of hydrocarbons therefrom. If any carbon dioxide is produced from the production well together with the hydrocarbons, the carbon dioxide may be separated from the hydrocarbons for re-injection into the oil reservoir. It is also envisaged that the dense phase CO₂ product stream may be sequestered by being injected into an aquifer or a depleted oil or gas reservoir for storage therein.

Typically, the amount of CO₂ contained in the H₂ rich vapour stream that is obtained from the CO₂ condensation plant is less than 10 mole %, preferably less than 5 mole %, more preferably, less than 2 mole %, in particular, less than 1 mole %.

Where the synthesis gas feed stream has not been subjected to a shift conversion, the H₂ rich vapour stream may comprise up to 20 mole % carbon monoxide (CO). Where the synthesis gas feed stream has been subjected to a shift conversion, the H₂ rich vapour stream typically comprises trace amounts of CO and methane, for example, less than 500 ppm on a molar basis. The remainder of the hydrogen rich vapour stream that is obtained from the CO₂ condensation plant is predominantly hydrogen.

As discussed above, the H₂ rich vapour stream obtained from the CO₂ condensation plant may be used as fuel for a low pressure burner of a fired heater, or as fuel for a reformer or boiler or as a refinery feed stream for upgrading of one or more refinery streams or as a feed to a chemical process. However, it is preferred to use the H₂ rich vapour stream as a fuel gas stream for the combustor of at least one gas turbine of a power plant thereby producing electricity. Where the H₂ rich vapour stream is to be used as a fuel, it is preferred that the H₂ rich vapour stream contains only trace amounts of CO thereby minimizing the amount of CO₂ released to atmosphere (where the CO₂ arises from combustion of CO).

As discussed above, an advantage of the present invention is that the fuel gas stream may be obtained at above the minimum inlet pressure for the combustor(s) of the gas turbine(s). Typically, the feed pressure for the fuel gas stream (inlet pressure for the combustor of the gas turbine(s)) is in the range of 25 to 45 barg, preferably, 28 to 40 barg, in plute. Accordingly, there is no requirement for a compressor to compress the fuel gas stream to the inlet pressure for the combustor(s) of the gas turbine(s). Preferably, the H₂ rich vapour stream is diluted with medium pressure nitrogen and/or medium pressure steam prior to being fed as fuel gas to the combustor(s) of the gas turbine(s). Accordingly, the fuel gas stream that is fed to the combustor(s) of the gas turbine(s) preferably contains 35 to 65 mole % hydrogen, more preferably, 45 to 60 mole % hydrogen, for example, 48 to 52 mole % of hydrogen.

It has been found that the expansion energy recovered from the H₂ rich vapour streams in the turboexpanders of the turboexpansion system (when the fuel gas stream is obtained at a pressure of about 30 barg) can reduce the net power consumption of the separation process to less than 30 MW, preferably, less than 25 MW, in particular less than 23 MW when processing 28,000 kmol/hour of synthesis gas containing 56 mol% hydrogen and 43 mol% CO₂. The net power consumption is defined as: [power consumption in the compression system + power consumption in the external refrigerant compression system (if used)] -[power generated in the turboexpansion system].

The exhaust gas from the gas turbine(s) of the power plant is passed to a heat recovery and steam generator unit (HRSG) where the exhaust gas may be heat exchanged with various process streams. Optionally, the temperature of the exhaust gas of the gas turbine is increased by providing the HRSG with a post-firing system, for example, a post-firing burner. Suitably, the post-firing burner is fed with a portion of the fuel gas stream wherein the fuel gas stream is combusted in the burner using residual oxygen contained in the exhaust gas. Suitably, the exhaust gas is raised in temperature in the post-firing system to a temperature in the range of 500 to 800°C.

Typically, the HRSG generates and superheats steam for use in at least one steam turbine and/or in a process for generating the synthesis gas and/or for diluting the fuel gas stream. Typically, the HRSG is capable of generating high pressure (HP) steam, medium pressure (MP) steam and low pressure (LP) steam and of superheating these steam streams. The HRSG may also be capable of reheating MP steam that is produced as an exhaust stream from the high pressure stage of a multistage steam turbine. In addition, the HRSG may be used to heat boiler feed water (for example, boiler feed water that is fed to the waste heat boiler of a shift converter unit).

The cooled exhaust gas is discharged from the HRSG to the atmosphere through a stack. Preferably, the stack is provided with a continuous emission monitoring system for monitoring, for example, the NOₓ content of the cooled exhaust gas.

The present invention further refers to a carbon dioxide condensation plant for separating carbon dioxide and a hydrogen from a synthesis gas stream according to claim 15.

As discussed above, the CO₂ condensation plant may optionally comprise a valve for letting down the pressure of the separated liquid CO₂ stream to the CO₂ export pressure. Accordingly, the CO₂ condensation plant optionally comprises a flash separation vessel for separating any hydrogen rich vapour from the reduced pressure liquid CO₂ stream.

Also, as discussed above, the CO₂ condensation plant may optionally comprise a cryogenic separation system comprising at least one cryogenic separation stage that is comprised of a heat exchanger that employs an external refrigerant and a gas-liquid separator vessel with the cryogenic separation system being operated with minimal pressure drop across the cryogenic separation stage or stages of the system. Accordingly, the gas-liquid separator vessel for separating the partially condensed compressed synthesis gas stream into a hydrogen rich vapour stream and liquid CO₂ stream is either the gas-liquid separator vessel of a single cryogenic separation stage or is the final gas-liquid separator vessel of a plurality of cryogenic separator vessels that are arranged in series. Where the cryogenic separation system comprises a plurality of separation stages, a liquid CO₂ stream will be withdrawn from the final cryogenic separation stages and additional liquid CO₂ streams will be withdrawn from each of the gas-liquid separator vessels of the preceding cryogenic separation stages of the series.

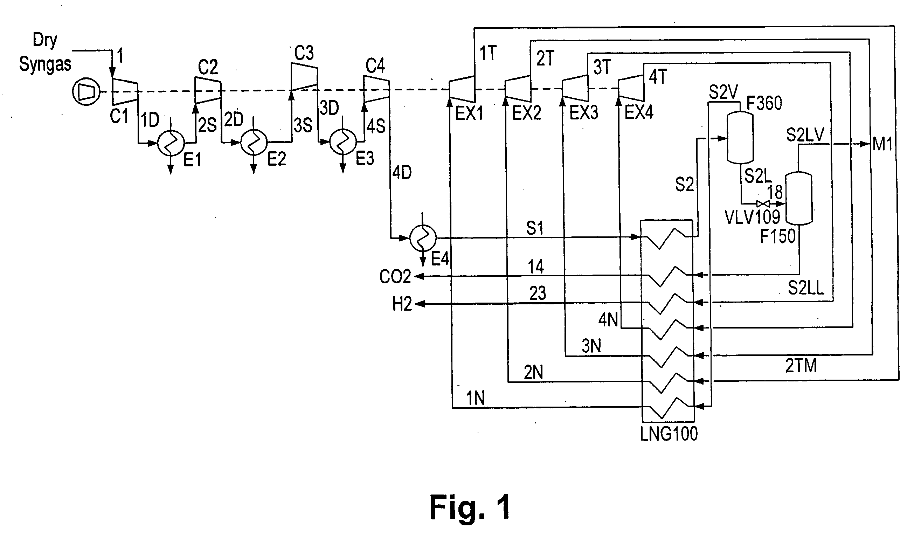

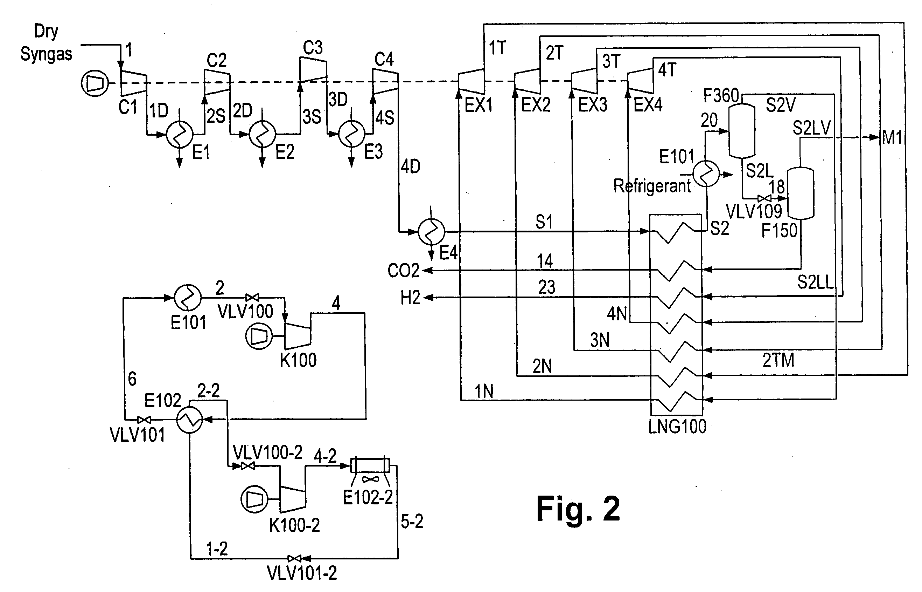

The process of the present invention will now be illustrated by reference to Figures 1 and 2.

Figure 1 shows a detailed process flow diagram for a first embodiment of the process and CO₂ condensation plant of the present invention. A dry synthesis gas stream 1 is fed at a pressure of 60 barg and a temperature of 40°C to a compression system comprising a first low pressure (LP) compressor C1, a second low pressure (LP) compressor C2, a first high pressure (HP) compressor C3 and a second HP compressor C4 that are arranged in series (i.e. four stages of compression). The first and second LP compressors, C1 and C2 respectively, are arranged on a common drive shaft. Similarly, the first and second HP compressors, C3 and C4 respectively, are arranged on a common drive shaft.

The low pressure synthesis gas stream 1D that exits the first LP compressor C 1 is at a pressure of 94 bar and a temperature of 84.62°C, the increase in temperature arising from heat of compression. Stream 1D is then cooled in heat exchanger E1 against a cold stream (for example, water or air) and is passed as stream 2S to the second LP compressor C2 thereby generating a second LP synthesis gas stream 2D having a pressure of 147.0 bar and a temperature of 84.21°C. Stream 2D is then cooled in heat exchanger E2 against a cold stream (for example, water or air) and is passed as stream 3S to the first high pressure (HP) compressor C3 thereby generating a first high pressure stream 3D having a pressure of 230.0 barg and a temperature of 83.56°C. Stream 3D is then cooled in heat exchanger E3 against a cold stream (for example, water or air) and is passed as stream 4S to the second HP compressor C4 thereby forming a second HP synthesis gas stream 4D having a pressure of 360.0 barg and a temperature of 82.25°C. Stream 4D is then cooled in heat exchanger E4 against a cold stream (for example, water or air) thereby generating HP synthesis gas stream S1 having a temperature of about 40°C. The person skilled in the art would understand that the number of compression stages has been optimised to minimise power consumption and that compression from 60 to 360 barg could also have been achieved using two or three compression stages. The person skilled in the art would also understand that the pressure of the synthesis gas exiting each compression stage can be varied. However, the discharge pressure from the final stage of compression determines the amount of carbon dioxide that is captured from the synthesis gas stream. The person skilled in the art will also understand that the HP synthesis gas may be cooled in heat exchanger E4 against an external refrigerant, for example, propane, propylene or ammonia, to a temperature in the range of 0 to -30°C thereby reducing the cooling duty for the multichannel heat exchanger LNG-100.

HP synthesis gas stream S 1 is then passed through multichannel heat exchanger LNG-100 where it is cooled against a plurality of cold process stream (see below) thereby generating a cooled HP synthesis gas stream S2 having a pressure of 358.5 bar and a temperature of -21.33°C (where stream S 1 has a temperature of about 40°C).

Stream S2 is passed directly to gas-liquid separator vessel F360 where a hydrogen rich vapour phase separates from a liquid CO₂ phase. Accordingly, a hydrogen rich vapour stream S2V is removed overhead from separator vessel F360 and is passed through multichannel heat exchanger LNG-100 thereby cooling the HP synthesis gas stream S1. H₂ rich vapour stream 1N exits the multichannel heat exchanger LNG-100 and is then routed to expander EX 1 where it is expanded to lower pressure. The person skilled in the art would understand that isentropic expansion of the vapour stream results in cooling. Accordingly, stream 1T exits the expander EX 1 at a pressure of 205.0 barg and a temperature of -26.25°C and is routed through multichannel heat exchanger LNG-100 where it is heat exchanged with HP synthesis gas stream S1-thereby cooling the HP synthesis gas stream S1. H₂ rich vapour stream 2N exits the multichannel heat exchanger LNG-100 and is passed to expander EX2 where the vapour stream is expanded to lower pressure. H₂ rich vapour stream 2T exits the expander at a pressure of 112.0 barg and a temperature of -26.01°C and is passed to manifold M1. A liquid CO₂ stream S2L is withdrawn from the bottom of separator vessel F360 and is flashed across valve VLV-109 thereby generating a further two phase stream 18 that is passed to flash vessel F150. H₂ rich vapour stream S2LV that is withdrawn from the top of flash vessel F150 is routed to manifold M1 where is it combined with H₂ rich vapour stream 2T to form combined vapour stream 2TM. Vapour stream 2TM is then passed through multichannel heat exchanger LNG-100 thereby cooling HP synthesis gas stream S1. H₂ rich vapour stream 3N that exits the multichannel heat exchanger LNG-100 is then passed to expander EX3 where it is expanded to lower pressure. Vapour stream 3T exits expander EX3 at a pressure of 65.0 barg and a temperature of -24.56°C and is passed through multichannel heat exchanger LNG-100 thereby cooling HP synthesis gas stream S1. H₂ rich vapour stream 4N is then passed to expander EX4 where it is expanded to lower pressure. H₂ rich vapour stream 4T exits expander EX4 at a pressure of 31.0 barg and a temperature of-24.59°C and is passed through multichannel heat exchanger LNG-100 thereby cooling HP synthesis gas stream S1. The final H₂ rich vapour stream 23 that exits the multichannel heat exchanger LNG-100 has a pressure of 30.5 barg and a temperature of 37.00°C. This vapour stream comprises 88.42 mole% H₂ and 9.30 mole% CO₂ and, after dilution with medium pressure N₂ and/or medium pressure steam, may be passed as hydrogen fuel gas to the combustor(s) of the gas turbine(s) of a Power Island (not shown). The person skilled in the art will understand that the number of expanders can be increased or decreased (minimum of two expanders). The person skilled in the art will also understand that the operating pressure and temperature of the expanders can also be varied provided that the vapour stream that exits the multichannel heat exchanger has a pressure of at least 30 barg. The expanders EX1, EX2, EX3 and EX4 may be connected to electric motors to recover energy and the electricity may be either used in the process or is exported from the process. Alternatively, the expanders may be directly coupled to the compressors, for example, by mounting the expanders and compressors on a common shaft so that the isentropic expansion of the hydrogen rich vapour in the expanders is used to turn the common shaft and to drive the compressors. Accordingly, the net power consumption for the flow scheme of Figure 1 is 22.94 MW. An advantage of the flow scheme of Figure 1 is that the H₂ fuel gas stream that exits LNG-100 is above the operating pressure of the combustor(s) of the gas turbine(s) of the Power Island thereby allowing the omission of a hydrogen compressor.

A liquid CO₂ stream S2LL is withdrawn from the bottom of flash vessel F_150 and is passed through multichannel heat exchanger LNG-100 where it is used to cool HP synthesis gas stream S1. A dense phase CO₂ stream 14 exits the multichannel heat exchanger LNG-100 at a temperature of 24°C and a pressure of 149.5 barg. Accordingly, the dense phase CO₂ stream is above the minimum pipeline export pressure (typically, 130 barg). The dense phase CO₂ stream that exits the multichannel heat exchanger comprises 96.52 mole% CO₂ and 2.69 mole% hydrogen. The hydrogen recovery is 98.15 % based on the moles of H₂ in the dry synthesis gas stream. The amount of carbon dioxide captured from the dry synthesis gas stream is 84.58 % based on the moles of CO₂ in the dry synthesis gas stream

Figure 2 shows a detailed process flow diagram for a further embodiment of the process and CO₂ condensation plant of the present invention. The multistage compression system of Figure 2 is identical to that of Figure 1 and is operated under the same conditions of temperature and pressure. Accordingly, the HP synthesis gas stream S 1 exits heat exchanger E4 at a pressure of 360.0 bar and a temperature of about 40°C. HP synthesis gas stream S1 is then passed through multichannel heat exchanger LNG-100 where it is cooled against a plurality of cold process stream (see below) thereby generating cooled HP synthesis gas stream S2 having a pressure of 358.5 bar and a temperature of -36.92°C.

Stream S2 is then cooled to a temperature of -50°C against ethane refrigerant that is fed to the shell side of kettle E-101 of a refrigeration circuit (discussed below) thereby generating a two phase stream 20 that is passed to separator vessel F360 where a hydrogen rich vapour phase separates from a liquid CO₂ phase. A H₂ rich vapour stream S2V is removed overhead from the separator vessel F360 and is passed through multichannel heat exchanger LNG-100 where it is heated against HP synthesis gas stream S1 thereby forming vapour stream 1N (and cooling the HP synthesis gas stream S1). H₂ rich vapour stream 1N is then routed to expander EX1 where it is expanded to lower pressure. H₂ rich vapour stream 1T exits the expander EX 1 at a pressure of 205.0 barg and a temperature of-31.63°C and is routed through multichannel heat exchanger LNG-100 where it is heat exchanged with HP synthesis gas stream S1 thereby forming vapour stream 2N (and cooling the HP synthesis gas stream S1). H₂ rich vapour stream 2N is passed to expander EX2 where the vapour stream is expanded to lower pressure. H₂ rich vapour stream 2T exits the expander at a pressure of 112.0 barg and a temperature of -35.04°C and is passed to manifold M1. A liquid CO₂ stream S2L is withdrawn from the bottom of separator vessel F_360 and is flashed across valve VLV-109 thereby generating a further two phase stream 18 that is passed to flash vessel F150. H₂ rich vapour stream S2LV that is withdrawn from the top of flash vessel F150 is routed to manifold M1 where is it combined with H₂ rich vapour stream 2T to form combined vapour stream 2TM. The combined H₂ rich vapour stream 2TM is then passed through multichannel heat exchanger LNG-100 where it is heated against HP synthesis gas stream S1 thereby forming vapour stream 3N (and cooling the HP synthesis gas stream S1). H₂ rich vapour stream 3N is passed to expander EX3 where it is expanded to lower pressure. H₂ rich vapour stream 3T exits expander EX3 at a pressure of 65.0 barg and a temperature of -42.57°C and is passed through multichannel heat exchanger LNG-100 where it is heated against HP synthesis gas stream S1 thereby forming vapour stream 4N (and cooling the HP synthesis gas stream S1). H₂ rich vapour stream 4N is then passed to expander EX4 where it is expanded to lower pressure. H₂ rich vapour stream 4T exits expander EX4 at a pressure of 31.0 barg and a temperature of -53.81°C and is heated against HP synthesis gas stream S1 in multichannel heat exchanger LNG-100 (thereby cooling HP synthesis gas stream S1). The final H₂ rich vapour stream 23 that exits the multichannel heat exchanger has a pressure of 30.5 barg and a temperature of 37°C and, after being diluted with MP N₂ and/or steam, is passed as hydrogen fuel gas to the combustor(s) of the gas turbine(s) of a Power Island (not shown). An advantage of the flow scheme of Figure 2 is that the H₂ fuel gas stream that exits LNG-100 is above the operating pressure of the combustor(s) of the gas turbine(s) of the Power Island thereby allowing the omission of a hydrogen compressor.

The person skilled in the art will understand that the number of expanders can be increased or decreased (minimum of two expanders). The person skilled in the art will also understand that the operating pressure and temperature of the expanders can also be varied provided that the vapour stream that exits the multichannel heat exchanger has a pressure of at least 30 barg. The expanders EX1, EX2, EX3 and EX4 are each connected to electric motors to recover energy and the electricity may be either used in the process or is exported from the process. Alternatively, the expanders may be directly coupled to the compressors, for example, by mounting the expanders and compressors on a common shaft so that the isentropic expansion of the hydrogen rich vapour in the expanders is used to turn the common shaft and to drive the compressors. Accordingly, the net power consumption for the flow scheme of Figure 2 is 30 MW.

A liquid CO₂ stream S2LL is withdrawn from the bottom of separator vessel F_150 and is passed through multichannel heat exchanger LNG-100 where it is used to cool HP synthesis gas stream S1. The dense phase CO₂ stream 14 exits the multichannel heat exchanger LNG-100 at a temperature of 24°C and a pressure of 149.5 barg. Accordingly, the dense phase CO₂ stream is above the minimum pipeline export pressure (typically, 130 barg).

The dense phase CO₂ stream that exits the multichannel heat exchanger comprises 97.87 mole% CO₂ and 1.36 mole% hydrogen. The final H₂ rich vapour stream that exits the multichannel heat exchanger LNG-100 comprises 94.38 mole% H₂ and 3.24 mole % CO₂. The hydrogen recovery is 98.8 % based on the moles of H₂ in the dry synthesis gas stream. The amount of carbon dioxide captured from the dry synthesis gas stream is 92.5% based on the moles of CO₂ in the dry synthesis gas stream.

The ethane refrigerant that is fed to the shell side of kettle E-101 of the refrigeration circuit may be obtained using any cryogenic method known to the person skilled in the art, including cryogenic methods for producing refrigerants for liquefying natural gas. The ethane refrigerant for heat exchanger E-101 may be replaced with ethylene.

Typically, the Ethane refrigerant that is employed in Kettle E-101 of refrigeration circuit is compressed in Ethane Compressor K-100. Ethane vapour stream 4 from the discharge of Ethane Compressor K-100 is fully condensed against propane refrigerant in Ethane Condenser E-102 against propane refrigerant. The liquefied ethane stream 6 exiting E-102 is then routed to kettle E-101 with ethane flow to kettle E-101 being controlled by means of an inlet level control valve VLV-101. The ethane vapour stream 2 exiting the E-101 kettle is at a temperature of -51.59°C and a pressure of 5 bar and is routed to Ethane Compressor K-100 via valve VLV-100.

The propane refrigerant in the CO₂ Condensation Circuit is compressed in Propane Compressor K-100-2. Propane vapour stream 4-2 from the compressor K-100-2 discharge is fully condensed in air cooled Condenser E-102-2. The liquefied propane 5-2 exiting Condenser E-102-2 is routed to kettle E-102 that is operated at a temperature of -32.62°C and a pressure of 1.5 barg. The propane flow 1-2 to kettle E-102 is controlled by means of an inlet level control valve VLV-101-2. Vapour stream 2-2 exiting the kettle E-101-2 is routed to the propane compressor K-100-2 via valve VLV 100-2.

It is also envisaged that the CO₂ condensation plant of Figure 2 may be operated under different conditions of temperature and pressure. Thus, dry synthesis gas stream 1 is fed to the compression system at a pressure of 60 barg and a temperature of 40°C. The low pressure synthesis gas stream 1D that exits the first LP compressor C1 is at a pressure of 78.00 bar and a temperature of 65.55°C. Stream 1D is then cooled in heat exchanger E1 against a cold stream (for example, water or air) and is passed to the second LP compressor C2 thereby generating a second LP synthesis gas stream 2D having a pressure of 102.0 bar and a temperature of 66.63°C. Stream 2D is then cooled in heat exchanger E2 against a cold stream (for example, water or air) and is passed to the first high pressure (HP) compressor C3 thereby generating a first high pressure stream 3D having a pressure of 134.0 barg and a temperature of 66.78°C. Stream 3D is then cooled in heat exchanger E3 against a cold stream (for example, water or air) and is passed to the second HP compressor C4 thereby forming a second HP synthesis gas stream 4D having a pressure of 175 barg and a temperature of 65.75°C. Stream 4D is then cooled in heat exchanger E4 against a cold stream (for example, water or air) before being passed through multichannel heat exchanger LNG-100 where it is cooled against a plurality of cold process stream (see below) thereby generating cooled HP synthesis gas stream S2 having a pressure of 173.5 bar and a temperature of -26.55°C.

Stream S2 is cooled to a temperature of -50°C against ethane refrigerant that is fed to the shell side of kettle E-101 of a refrigeration circuit (the refrigeration circuit being as described for Figure 2) thereby generating a two phase stream 20 that is passed to separator vessel F360. A H₂ rich vapour stream S2V is removed overhead from the separator vessel F360 and is passed through multichannel heat exchanger LNG-100 where it is heated against HP synthesis gas stream S1 thereby forming vapour stream 1N (and cooling the HP synthesis gas stream S1). H₂ rich vapour stream 1N is then routed to expander EX1 where it is expanded to lower pressure. Accordingly, stream 1T exits the expander EX1 at a pressure of 112.0 barg and a temperature of -25.56°C and is routed through multichannel heat exchanger LNG-100 where it is heat exchanged with HP synthesis gas stream S thereby forming vapour stream 2N (and cooling the HP synthesis gas stream S1). H₂ rich vapour stream 2N is passed to expander EX2 where the vapour stream is expanded to lower pressure. H₂ rich vapour stream 2T exits the expander at a pressure of 73.0 barg and a temperature of -25.48°C and is passed to manifold M1. A liquid CO₂ stream S2L is withdrawn from the bottom of separator vessel F360 and is optionally flashed across valve VLV-109 thereby generating a further two phase stream 18 that is passed to flash vessel F150. A H₂ rich vapour stream S2LV that is withdrawn from the top of flash vessel F150 is routed to manifold M1 where is it combined with H₂ rich vapour stream 2T to form combined vapour stream 2TM. Combined H₂ rich vapour stream 2TM is then passed through multichannel heat exchanger LNG-100 where it is heated against HP synthesis gas stream S1 thereby forming vapour stream 3N (and cooling the HP synthesis gas stream S1). Vapour stream 3N is passed to expander EX3 where it is expanded to lower pressure. H₂ rich vapour stream 3T exits expander EX3 at a pressure of 48.0 barg and a temperature of -35.31°C and is passed through multichannel heat exchanger LNG-100 where it is heated against HP synthesis gas stream S1 thereby forming vapour stream 4N (and cooling the HP synthesis gas stream S1). Vapour stream 4N is then passed to expander EX4 where it is expanded to lower pressure. H₂ rich vapour stream 4T exits expander EX4 at a pressure of 31.0 barg and a temperature of -36.50°C and is heated against HP synthesis gas stream S1 in multichannel heat exchanger LNG-100 (thereby cooling HP synthesis gas stream S1). The final H₂ rich vapour stream that exits the multichannel heat exchanger has a pressure of 30.5 barg and a temperature of 37°C and, after being diluted with MP N₂ and/or steam, is passed as hydrogen fuel gas to the combustor(s) of the gas turbine(s) of a Power Island (not shown). Accordingly, the H₂ fuel gas stream that exits LNG-100 is above the operating pressure of the combustor(s) of the gas turbine(s) of the Power Island thereby allowing the omission of a hydrogen compressor.

The person skilled in the art will understand that the number of expanders can be increased or decreased (minimum of two expanders). The person skilled in the art will also understand that the operating pressure and temperature of the expanders can also be varied provided that the vapour stream that exits the multichannel heat exchanger has a pressure of at least 30 barg. The expanders EX1, EX2, EX3 and EX4 are each connected to electric motors to recover energy and the electricity may be either used in the process or is exported from the process. Alternatively, the expanders may be directly coupled to the compressors, for example, by mounting the expanders and compressors on a common shaft so that the isentropic expansion of the hydrogen rich vapour in the expanders is used to turn the common shaft and to drive the compressors. Accordingly, the net power consumption for the flow scheme of Figure 2, when operated under these different process conditions, is 24.38 MW.

A liquid CO₂ stream S2LL is withdrawn from the bottom of separator vessel F150 and is passed through multichannel heat exchanger LNG-100 where it is used to cool HP synthesis gas stream S1. The dense phase CO₂ stream exits the multichannel heat exchanger LNG-100 at a temperature of 24°C and a pressure of 149.5 barg. Accordingly, the dense phase CO₂ stream is above the minimum pipeline export pressure (typically, 130 barg). If desired, the liquid CO₂ stream may be boosted in pressure, using a CO₂ pump (not shown) to a pressure of up to 200 barg.

The dense phase CO₂ stream that exits the multichannel heat exchanger comprises 98.28 mole% CO₂ and 1.19 mole% hydrogen. The final H₂ rich vapour stream that exits the multichannel heat exchanger LNG-100 comprises 92.06 mole% H₂ and 5.44 mole % CO₂. The hydrogen recovery is 99.14 % based on the moles of H₂ in the dry synthesis gas feed stream. The amount of carbon dioxide captured from the dry synthesis gas stream is 90.08% based on the moles of CO₂ in the dry synthesis gas feed stream.

## Claims

1. A process for separating a synthesis gas stream (1) into a hydrogen (H₂) rich vapour stream (23) and a liquid carbon dioxide (CO₂) stream (14) in a CO₂ condensation plant that comprises (a) a compression system comprising at least one compressor (C1, C2, C3, C4), (b) a heat exchanger system (E4, LNG100), (c) a gas-liquid separator vessel (F360, F 150), and (d) a turboexpansion system comprising a plurality of turboexpanders (EX1, EX2, EX3, EX4) arranged in series, the process comprising the steps of:
(A) feeding a synthesis gas stream (1) having a pressure in the range of 10 to 120 barg to the compression system of the CO₂ condensation plant such that the synthesis gas (1) is increased in pressure to a pressure in the range of 150 to 400 barg and cooling the resulting high pressure (HP) synthesis gas against an external coolant to remove at least part of the heat of compression;
(B) cooling the HP synthesis gas stream (4D) formed in step (A) to a temperature in the range of -15 to -55°C by passing the HP synthesis gas stream through the heat exchanger system (E4, LNG100) in heat exchange relationship with a plurality of refrigerant streams that are produced subsequently in the process wherein the internal refrigerant streams are selected from the group consisting of cold hydrogen rich vapour streams (1T, 2T, 3T, 4T), and liquid CO₂ streams (S2LL);
(C) passing the cooled HP synthesis gas stream (S2) formed in step (B) either directly or indirectly to a gas-liquid separator vessel (F360) that is operated at substantially the same pressure as the heat exchanger system and withdrawing a high pressure (HP) hydrogen rich vapour stream (S2V) from at or near the top of the separator vessel and a high pressure (HP) liquid CO₂ stream (S2L) from at or near the bottom of the separator vessel; and
(D) feeding the HP hydrogen rich vapour stream (S2V) from step (C) to the turboexpansion system wherein the hydrogen rich vapour stream is subjected to isentropic expansion in each of the turboexpanders (EX1, EX2, EX3, EX4) of the series such that hydrogen rich vapour streams are withdrawn from the turboexpanders of the series at reduced temperature and at successively reduced pressures and wherein isentropic expansion of the hydrogen rich vapour in each of the turboexpanders of the series generates motive power thereby driving a machine that is a component of the CO₂ condensation plant and/or driving an alternator of an electric generator.

2. A process as claimed in Claim 1, wherein the hydrogen rich vapour stream (4T) that exits the final turboexpander (EX4) in step (D) is obtained at a pressure in the range of 25 to 45 barg.

3. A process as claimed in Claim 1 or Claim 2, wherein liquid carbon dioxide is exported from the process at a pressure in the range of 100 to 175 barg.

4. A process as claimed in any preceding claim wherein the heat exchanger system comprises at least one multichannel heat exchanger (LNG100) and the HP synthesis gas stream is passed through a channel in the multichannel heat exchanger (LNG100) in heat exchange relationship with a plurality of internal refrigerant streams that are passed through further channels in the multichannel heat exchanger (LNG100).

5. A process as claimed any preceding claim wherein the heat exchanger system comprises a plurality of stand-alone heat exchangers arranged in series and the HP synthesis gas stream is cooled in step (B) as it is passed through the heat exchangers of the series by heat exchange with a plurality of internal refrigerant streams that are fed to the first and successive heat exchangers of the series at successively lower temperatures.

6. A process as claimed in any one of the preceding claims wherein the HP liquid CO₂ stream (S2L) that is withdrawn from the gas-liquid separator (F360) in step (C) is obtained at the liquid CO₂ export pressure and the HP liquid CO₂ stream (S2L) is then passed through the heat exchanger system in heat exchange relationship with the HP synthesis gas stream before being exported from the process and sequestered and/or used in a chemical process.

7. A process as claimed in any one of claims 1 to 5 wherein the HP liquid CO₂ stream (S2L) of step (C) is obtained at a pressure above the liquid CO₂ export pressure and is reduced in pressure to the liquid CO₂ export pressure before being passed to a flash separation vessel (F150) where a hydrogen rich vapour stream (S2LV) is withdrawn from at or near the top of the flash separation vessel (F150) and a liquid CO₂ stream (S2LL) is withdrawn from at or near the bottom of the flash separator vessel and the liquid CO₂ stream (S2LL) is then passed through the heat exchanger system in heat exchange relationship with the HP synthesis gas stream before being exported from the process and sequestered and/or used in a chemical process.

8. A process as claimed in any one of the preceding claims wherein the hydrogen rich vapour stream (4T) that exits the final turboexpander (EX4) in step (D) is obtained at a pressure in the range of 1 to 200 barg, preferably 10 to 100 barg.

9. A process as claimed in any one of the preceding claims wherein the hydrogen rich vapour stream (4T) that exits the final turboexpander (EX4) in step (D) is obtained at a pressure in the range of 25 to 45 barg, preferably, 30 to 35 barg and is passed as fuel gas to a combustor of at least one gas turbine of a power plant.

10. A process as claimed in any one of the preceding claims wherein the cooled HP synthesis gas stream formed in step (B) has a temperature in the range of -30 to -40°C and is passed to a cryogenic separation system that comprises a single cryogenic separation stage comprised of a heat exchanger that employs an external refrigerant and a gas-liquid separator vessel (F360) wherein the pressure drop across the cryogenic separation stage is in the range of 0.1 to 5 bar; the heat exchanger of the cryogenic separation stage has an operating temperature in the range of -40 to -55°C; and wherein the HP hydrogen rich vapour stream and the HP liquid CO₂ stream of step (C) are withdrawn from the gas-liquid separator vessel of the cryogenic separation stage.

11. A process as claimed in any one of Claims 1 to 9 wherein the cooled HP synthesis gas stream that is formed in step (B) has a temperature in the range of -15 to -30°C and is passed to a cryogenic separation system comprising a plurality of cryogenic separation stages that are arranged in series wherein each cryogenic separation stage of the series is comprised of a heat exchanger that employs an external refrigerant and a gas-liquid separation vessel; the cryogenic separation stages of the series are operated at progressively lower temperatures and with a pressure drop across the series of cryogenic separation stages in the range of 0.1 to 5 bar; the HP hydrogen rich vapour stream (S2LV) and the HP liquid CO₂ stream (S2LL) of step (C) are withdrawn from the gas-liquid separator vessel of the final cryogenic separation stage in the series; and additional HP liquid CO₂ streams (S2L) are withdrawn from each of the preceding cryogenic separation stages in the series.

12. A process as claimed in any one of the preceding claims wherein the synthesis gas stream (1) is compressed in the compression system to a pressure in the range of 175 to 360 barg, preferably, 250 to 360 barg, more preferably, 300 to 360 barg, in particular, 330 to 360 barg.

13. A process as claimed in any one of the preceding claims wherein the synthesis gas (1) is compressed in a multistage compressor system comprising a plurality of compressors (C1, C2, C3, C4) arranged in series wherein a heat exchanger (E1, E2, E3, E4) is provided after each compressor of the series and wherein the synthesis gas is cooled in each heat exchanger against an external coolant selected from the group consisting of air, water or a cold process stream selected from the H₂ rich vapour stream formed in step (C) or the final H₂ rich vapour stream from step (D).

14. A process as claimed in any one of the preceding claims wherein the liquid CO₂ product stream (14) is used as injection fluid for an oil reservoir by injecting the liquid CO₂ down an injection well and into the oil reservoir thereby displacing hydrocarbons towards an associated production well.

15. A carbon dioxide condensation plant for separating carbon dioxide and hydrogen from a synthesis gas stream (1), the plant comprising:
(a) means for providing a synthesis gas feed stream (1);
(b) a compression system (C1, C2, C3, C4) for compressing the synthesis gas feed stream to a pressure in the range of 150 to 400 barg;
(c) a heat exchanger system (LNG100) for cooling the compressed synthesis gas stream to a temperature in the range of -15 to -55°C against a plurality of internal refrigerant streams thereby partially condensing the compressed synthesis gas stream;
(d) a gas-liquid separator vessel (F360) for separating the partially condensed compressed synthesis gas stream into a hydrogen rich vapour stream and liquid CO₂ stream with minimal pressure drop across the gas-liquid separator vessel;
(e) a turboexpander system comprising a plurality of turboexpanders (EX1, EX2, EX3, EX4) arranged in series for expanding the separated hydrogen rich vapour stream to successively lower pressures wherein the turboexpander system is adapted to produce a hydrogen rich vapour stream from the final turboexpander in the series at a pressure at or above the minimum fuel gas feed pressure to the combustor of a gas turbine of a power plant and wherein each turboexpander in the series is adapted to provide a hydrogen rich vapour stream that is used as an internal refrigerant stream for the heat exchanger system.

## Patentansprüche

1. Verfahren zum Trennen eines Synthesegasstromes (1) in einen Dampfstrom (23) reich an Wasserstoff (H₂) und einen flüssigen Kohlendioxid-(CO₂)-Strom (14) in einer CO₂-Kondensationsanlage, die Folgendes umfasst:
(a) ein Komprimierungssystem, das mindestens einen Kompressor (C1, C2, C3, C4) umfasst, (b) ein Wärmetauschersystem (E4, LNG100), (c) einen Gas-Flüssigkeits-Trennbehälter (F360, F150) und (d) ein Turboexpansionssystem, das mehrere Turboexpander (EX1, EX2, EX3, EX4) umfasst, die in Reihe angeordnet sind, wobei das Verfahren folgende Schritte umfasst:
(A) Führen eines Synthesegasstromes (1) mit einem Druck im Bereich von 10 bis 120 barg zum Komprimierungssystem der CO₂-Kondensationsanlage derart, dass der Druck des Synthesegases (1) auf einen Druck im Bereich von 150 bis 400 barg steigt, und Kühlen des entstandenen Hochdruck-(HD)-Synthesegases an einem externen Kühlmittel, um zumindest einen Teil der Kompressionswärme zu entfernen,
(B) Kühlen des in Schritt (A) gebildeten HD-Synthesegasstromes (4D) auf eine Temperatur im Bereich von -15 bis -55 °C, indem der HD-Synthesegasstrom durch das Wärmetauschersystem (E4, LNG100) geleitet wird, in einem Wärmeaustauschverhältnis mit mehreren Kältemittelströmen, die anschließend im Verfahren erzeugt werden, wobei die internen Kältemittelströme aus der Gruppe ausgewählt werden, die aus kalten, wasserstoffreichen Dampfströmen (1T, 2T, 3T, 4T) und flüssigen CO₂-Strömen (S2LL) besteht,
(C) Leiten des in Schritt (B) gebildeten gekühlten HD-Synthesegasstromes (S2) entweder direkt oder indirekt zu einem Gas-Flüssigkeits-Trennbehälter (F360), der mit im Wesentlichen dem gleichen Druck wie das Wärmetauschersystem betrieben wird und Entnehmen eines wasserstoffreichen Hochdruck-(HD)-Dampfstromes (S2V) an der Oberseite des Trennbehälters oder nahe derselben und eines flüssigen Hochdruck-(HD)-CO₂-Stromes (S2L) an der Unterseite des Trennbehälters oder nahe derselben und
(D) Führen des wasserstoffreichen HD-Dampfstromes (S2V) aus Schritt (C) zum Turboexpansionssystem, wobei der wasserstoffreiche Dampfstrom in jedem der Turboexpander (EX1, EX2, EX3, EX4) der Reihe derart einer isentropen Expansion unterzogen wird, dass aus den Turboexpandern der Reihe wasserstoffreiche Dampfströme mit verringerten Temperaturen und mit schrittweise verringerten Drücken entnommen werden, und wobei die isentrope Expansion des wasserstoffreichen Dampfes in jedem der Turboexpander der Reihe Antriebsenergie erzeugt, wodurch eine Maschine, die eine Komponente der CO₂-Kondensationsanlage ist, und/oder eine Wechselstrommaschine eines elektrischen Generators angetrieben wird.

2. Verfahren nach Anspruch 1, wobei der wasserstoffreiche Dampfstrom (4T), der den letzten Turboexpander (EX4) in Schritt (D) verlässt, bei einem Druck im Bereich von 25 bis 45 barg erzielt wird.

3. Verfahren nach Anspruch 1 oder 2, wobei flüssiges Kohlendioxid bei einem Druck im Bereich von 100 bis 175 barg aus dem Prozess ausgeführt wird.

4. Verfahren nach einem der vorhergehenden Ansprüche, wobei das Wärmetauschersystem mindestens einen Mehrkanal-Wärmetauscher (LNG100) umfasst und der HD-Synthesegasstrom in einem Wärmeaustauschverhältnis mit mehreren internen Kältemittelströmen, die durch weitere Kanäle im Mehrkanal-Wärmetauscher (LNG100) geleitet werden, durch einen Kanal im Mehrkanal-Wärmetauscher (LNG1 00) geleitet wird.

5. Verfahren nach einem der vorhergehenden Ansprüche, wobei das Wärmetauschersystem mehrere unabhängige Wärmetauscher umfasst, die in Reihe angeordnet sind, und der HD-Synthesegasstrom in Schritt (B), während er durch die Wärmetauscher der Reihe geleitet wird, mittels Wärmeaustausch mit mehreren internen Kältemittelströmen, die dem ersten und den nachfolgenden Wärmetauschern der Reihe bei schrittweise geringeren Temperaturen zugeführt werden, gekühlt wird.

6. Verfahren nach einem der vorhergehenden Ansprüche, wobei der flüssige HD-CO₂-Strom (S2L), der in Schritt (C) aus dem Gas-Flüssigkeits-Trennbehälter (F360) entnommen wird, beim Ausführungsdruck des flüssigen CO₂ erzielt wird und der flüssige HD-CO₂-Strom (S2L) dann im Wärmeaustauschverhältnis mit dem HD-Synthesegasstrom durch das Wärmetauschersystem geleitet wird, bevor er aus dem Verfahren ausgeführt und abgesondert und/oder in einem chemischen Verfahren verwendet wird.

7. Verfahren nach einem der Ansprüche 1 bis 5, wobei der flüssige HD-CO₂-Strom (S2L) aus Schritt (C) bei einem Druck höher als der Ausführungsdruck des flüssigen CO₂ erzielt wird und der Druck auf den Ausführungsdruck des flüssigen CO₂ verringert wird, bevor er zu einem Flash-Trennbehälter (F150) geleitet wird, wo ein wasserstoffreicher Dampfstrom (S2LV) an der Oberseite des Flash-Trennbehälters (F150) oder nahe derselben und ein flüssiger HD-CO₂-Strom (S2LL) an der Unterseite des Flash-Trennbehälters oder nahe derselben entnommen wird und der flüssige CO₂-Strom (S2LL) dann im Wärmeaustauschverhältnis mit dem HD-Synthesegasstrom durch das Wärmetauschersystem geleitet wird, bevor er aus dem Verfahren ausgeführt und abgesondert und/oder in einem chemischen Verfahren verwendet wird.

8. Verfahren nach einem der vorhergehenden Ansprüche, wobei der wasserstoffreiche Dampfstrom (4T), der den letzten Turboexpander (EX4) in Schritt (D) verlässt, bei einem Druck im Bereich von 1 bis 200 barg erzielt wird, vorzugsweise von 10 bis 100 barg.

9. Verfahren nach einem der vorhergehenden Ansprüche, wobei der wasserstoffreiche Dampfstrom (4T), der den letzten Turboexpander (EX4) in Schritt (D) verlässt, bei einem Druck im Bereich von 25 bis 45 barg erzielt wird, vorzugsweise von 30 bis 35 barg, und als Brenngas zu einer Brennkammer mindestens einer Gasturbinde einer Energieerzeugungsanlage geleitet wird.

10. Verfahren nach einem der vorhergehenden Ansprüche, wobei der in Schritt (B) gebildete gekühlte HD-Synthesegasstrom eine Temperatur im Bereich von -30 bis -40°C aufweist und zu einem kryogenen Trennsystem geleitet wird, das eine einzelne kryogene Trennstufe umfasst, die aus einem Wärmetauscher, der ein externes Kältemittel verwendet, und einem Gas-Flüssigkeits-Trennbehälter (F360) besteht, wobei der Druckabfall in der gesamten kryogenen Trennstufe im Bereich von 0,1 bis 5 bar liegt, wobei der Wärmetauscher der kryogenen Trennstufe eine Betriebstemperatur im Bereich von -40 bis -55°C aufweist und wobei der wasserstoffreiche HD-Dampfstrom und der flüssige HD-CO₂-Strom aus Schritt (C) aus dem Gas-Flüssigkeits-Trennbehälter der kryogenen Trennstufe entnommen werden.

11. Verfahren nach einem der Ansprüche 1 bis 9, wobei der gekühlte HD-Synthesegasstrom, der in Schritt (B) gebildet wurde, eine Temperatur im Bereich von -15 bis -30°C aufweist und durch ein kryogenes Trennsystem geleitet wird, das mehrere kryogene Trennstufen umfasst, die in Reihe angeordnet sind, wobei jede kryogene Trennstufe der Reihe aus einem Wärmetauscher, der ein externes Kältemittel verwendet, und einem Gas-Flüssigkeits-Trennbehälter besteht, wobei die kryogenen Trennstufen der Reihe bei einer fortschreitend geringeren Temperatur und mit einem Druckabfall in der gesamten Reihe der kryogenen Trennstufen im Bereich von 0,1 bis 5 bar betrieben werden, wobei der wasserstoffreiche HD-Dampfstrom (S2LV) und der flüssige HD-CO₂-Strom (S2LL) aus Schritt (C) aus dem Gas-Flüssigkeits-Trennbehälter der letzten kryogenen Trennstufe in der Reihe entnommen werden und weitere flüssige HD-CO₂-Ströme (S2L) aus jeder der vorausgehenden kryogenen Trennstufen in der Reihe entnommen werden.

12. Verfahren nach einem der vorhergehenden Ansprüche, wobei der Synthesegasstrom (1) im Komprimierungssystem bis zu einem Druck im Bereich von 175 bis 360 barg komprimiert wird, vorzugsweise 250 bis 360 barg, bevorzugter 300 bis 360 barg, insbesondere 330 bis 360 barg.

13. Verfahren nach einem der vorhergehenden Ansprüche, wobei das Synthesegas (1) in einem mehrstufigen Komprimierungssystem komprimiert wird, das mehrere Kompressoren (C1, C2, C3, C4) aufweist, die in Reihe angeordnet sind, wobei nach jedem Kompressor der Reihe ein Wärmetauscher (E1, E2, E3, E4) bereitgestellt wird und wobei das Synthesegas in jedem Wärmetauscher an einem externen Kühlmittel gekühlt wird, das aus der Gruppe ausgewählt wird, die aus Luft, Wasser oder einem kalten Verfahrensstrom besteht, der aus dem in Schritt (C) gebildeten H₂-reichen Dampfstrom oder dem letzten H₂-reichem Dampfstrom aus Schritt (D) ausgewählt wird.

14. Verfahren nach einem der vorhergehenden Ansprüche, wobei der flüssige CO₂-Produktstrom (14) als Einspritzfluid für eine Erdöllagerstätte verwendet wird, indem das flüssige CO₂ in eine Einspritzbohrung hinunter und in die Erdöllagerstätte eingespritzt wird, wodurch Kohlenwasserstoffe hin zu einer zugehörigen Produktionsborhung verlagert werden.

15. Kohlendioxid-Kondensationsanlage, um Kohlendioxid und Wasserstoff von einem Synthesegasstrom (1) zu trennen, wobei die Anlage Folgendes umfasst:
(a) Mittel zum Bereitstellen eines Synthesegas-Zufuhrstromes (1),
(b) ein Komprimierungssystem (C1, C2, C3, C4) zum Komprimieren des Synthesegas-Zufuhrstromes bis zu einem Druck im Bereich von 150 bis 400 barg,
(c) ein Wärmetauschersystem (LNG100) zum Kühlen des komprimierten Synthesegasstromes auf eine Temperatur im Bereich von -15 bis -55 °C an mehreren internen Kältemittelströmen, wodurch der komprimierte Synthesegasstrom teilweise kondensiert,
(d) einen Gas-Flüssigkeits-Trennbehälter (F360) zum Trennen des teilweise kondensierten komprimierten Synthesegasstromes in einen wasserstoffreichen Dampfstrom und einen flüssigen CO₂-Strom mit minimalem Druckabfall im gesamten Gas-Flüssigkeits-Trennbehälter,
(e) ein Turboexpandersystem, das mehrere Turboexpander (EX1, EX2, EX3, EX4) umfasst, die in Reihe angeordnet sind, um den abgetrennten wasserstoffreichen Dampfstrom schrittweise auf geringere Drücke zu expandieren, wobei das Turboexpandersystem dafür eingerichtet ist, im letzten Turboexpander in der Reihe einen wasserstoffreichen Dampfstrom mit einem Druck entsprechend oder über dem minimalen Brenngas-Zufuhrdruck für die Brennkammer einer Gasturbine einer Energieerzeugungsanlage zu erzeugen und wobei jeder Turboexpander in der Reihe dafür eingerichtet ist, einen wasserstoffreichen Dampfstrom zu erzeugen, der als ein interner Kältemittelstrom für das Wärmetauschersystem verwendet wird.

## Revendications

1. Procédé de séparation d'un courant de gaz de synthèse (1) en un courant de vapeur (23) riche en hydrogène (H₂) et un courant (14) de dioxyde de carbone (CO₂) liquide dans une usine de condensation de CO₂, qui comprend (a) un système de compression comprenant au moins un compresseur (C1, C2, C3, C4), (b) un système échangeur de chaleur (E4, LNG100), (c) une cuve de séparation de gaz-liquide (F360, F150) et (d) un système de turbo-expansion comprenant une pluralité de dispositifs de turbo-expansion (EX1, EX2, EX3, EX4) aménagés en série, le procédé comprenant les étapes consistant à :
(A) acheminer un courant de gaz de synthèse (1) ayant une pression manométrique dans la plage de 10 à 120 bars au système de compression de l'usine de condensation de CO₂ de sorte que le gaz de synthèse (1) voit sa pression augmenter à une pression manométrique dans la plage de 150 à 400 bars et refroidir le gaz de synthèse haute pression (HP) obtenu contre un réfrigérant externe pour éliminer au moins une partie de la chaleur de compression ;
(B) refroidir le courant de gaz de synthèse HP (4D) formé à l'étape (A) à une température dans la plage de -15 à -55°C en faisant passer le courant de gaz de synthèse HP à travers le système échangeur de chaleur (E4, LNG100) en relation d'échange thermique avec une pluralité de courants de réfrigérant qui sont produits ultérieurement dans le procédé, dans lequel les courants de réfrigérant internes sont choisis dans le groupe constitué de courants de vapeur (1T, 2T, 3T, 4T) riche en hydrogène et de courants de CO₂ liquide (S2LL) froids ;
(C) faire passer le courant de gaz de synthèse HP refroidi (S2) formé à l'étape (B) directement ou indirectement dans une cuve de séparation de gaz-liquide (F360) qui opère sensiblement à la même pression que le système échangeur de chaleur et retirer un courant de vapeur (S2V) riche en hydrogène haute pression (HP) du sommet ou à proximité du sommet de la cuve de séparation et un courant de CO₂ liquide (S2L) haute pression (HP) du fond ou à proximité du fond de la cuve de séparation ; et
(D) acheminer le courant de vapeur (S2V) riche en hydrogène HP de l'étape (C) au système du dispositif de turbo-expansion, dans lequel le courant de vapeur riche en hydrogène est soumis à une expansion isentropique dans chacun des dispositifs de turbo-expansion (EX1, EX2, EX3, EX4) de la série de sorte que des courants de vapeur riche en hydrogène soient retirés des dispositifs de turbo-expansion de la série à température réduite et à des pressions successivement réduites, et dans lequel l'expansion isentropique de la vapeur riche en hydrogène dans chacun des dispositifs de turbo-expansion de la série génère une puissance motrice, entraînant de la sorte une machine qui constitue un composant de l'usine de condensation de CO₂ et/ou entraînant un alternateur d'un générateur électrique.

2. Procédé selon la revendication 1, dans lequel le courant de vapeur (4T) riche en hydrogène qui sort du dispositif de turbo-expansion final (EX4) à l'étape (D) est obtenu à une pression manométrique dans la plage de 25 à 45 bars.

3. Procédé selon la revendication 1 ou la revendication 2, dans lequel le dioxyde de carbone liquide est évacué du procédé à une pression manométrique dans la plage de 100 à 175 bars.

4. Procédé selon l'une quelconque des revendications précédentes, dans lequel le système échangeur de chaleur comprend au moins un échangeur de chaleur multicanal (LNG100) et le courant de gaz de synthèse HP est envoyé à travers un canal de l'échangeur de chaleur multicanal (LNG100) en relation d'échange thermique avec une pluralité de courants de réfrigérant internes qui sont envoyés à travers d'autres canaux de l'échangeur de chaleur multicanal (LNG100).

5. Procédé selon l'une quelconque des revendications précédentes, dans lequel le système échangeur de chaleur comprend une pluralité d'échangeurs de chaleur autonomes aménagés en série et le courant de gaz de synthèse HP est refroidi à l'étape (B) au cours de son passage à travers les échangeurs de chaleur de la série par échange thermique avec une pluralité de courants de réfrigérant internes qui sont acheminés au premier échangeur de chaleur de la série et aux suivants à des températures de plus en plus basses.

6. Procédé selon l'une quelconque des revendications précédentes, dans lequel le courant de CO₂ liquide HP (S2L) qui est retiré du séparateur de gaz-liquide (F360) à l'étape (C) est obtenu à la pression d'évacuation de CO₂ liquide et le courant de CO₂ liquide HP (S2L) est ensuite acheminé à travers le système échangeur de chaleur en relation d'échange thermique avec le courant de gaz de synthèse HP avant d'être évacué du procédé et stocké et/ou utilisé dans un procédé chimique.

7. Procédé selon l'une quelconque des revendications 1 à 5, dans lequel le courant de CO₂ liquide HP (S2L) de l'étape (C) est obtenu à une pression supérieure à la pression d'évacuation de CO₂ liquide et est réduit en pression à la pression d'évacuation de CO₂ liquide avant d'être envoyé dans une cuve de séparation éclair (F150), où un courant de vapeur (S2LV) riche en hydrogène est retiré du sommet ou à proximité du sommet de la cuve de séparation éclair (F150) et un courant de CO₂ liquide (S2LL) est retiré du fond ou à proximité du fond de la cuve de séparation éclair et le courant de CO₂ liquide (2SLL) est ensuite envoyé à travers le système échangeur de chaleur en relation d'échange thermique avec le courant de gaz de synthèse HP avant d'être évacué du procédé et stocké et/ou utilisé dans un procédé chimique.

8. Procédé selon l'une quelconque des revendications précédentes, dans lequel le courant de vapeur riche en hydrogène (4T) qui sort du dispositif de turbo-expansion final (EX4) à l'étape (D) est obtenu à une pression manométrique dans la plage de 1 à 200 bars, de préférence de 10 à 100 bars.

9. Procédé selon l'une quelconque des revendications précédentes, dans lequel le courant de vapeur riche en hydrogène (4T) qui sort du dispositif de turbo-expansion final (EX4) à l'étape (D) est obtenu à une pression manométrique dans la plage de 25 à 45 bars, de préférence de 30 à 35 bars, et est envoyé comme gaz combustible dans une chambre de combustion d'au moins une turbine à gaz d'une centrale électrique.

10. Procédé selon l'une quelconque des revendications précédentes, dans lequel le courant de gaz de synthèse HP refroidi formé à l'étape (B) a une température dans la plage de -30 à -40 °C et est envoyé à un système de séparation cryogénique qui comprend un seul étage de séparation cryogénique constitué d'un échangeur de chaleur qui emploie un réfrigérant externe et d'une cuve de séparation de gaz-liquide (F360), dans lequel la chute de pression en travers de l'étage de séparation cryogénique se situe dans la plage de 0,1 à 5 bars ; l'échangeur de chaleur de l'étage de séparation cryogénique présente une température d'exploitation dans la plage de -40 à -55°C ; et le courant de vapeur riche en hydrogène HP et le courant de CO₂ liquide HP de l'étape (C) sont retirés de la cuve de séparation de gaz-liquide de l'étage de séparation cryogénique.

11. Procédé selon l'une quelconque des revendications 1 à 9, dans lequel le courant de gaz de synthèse HP refroidi qui est formé à l'étape (B) a une température dans la plage de -15 à -30°C et est envoyé à un système de séparation cryogénique comprenant une pluralité d'étages de séparation cryogéniques qui sont aménagés en série, dans lequel chaque étage de séparation cryogénique de la série est constituée d'un échangeur de chaleur qui emploie un réfrigérant externe et une cuve de séparation de gaz-liquide ; les étages de séparation cryogéniques de la série sont exploités à des températures de plus en plus basses et avec une chute de pression en travers de la série d'étages de séparation cryogéniques dans la plage de 0,1 à 5 bars ; le courant de vapeur riche en hydrogène HP (S2LV) et le courant de CO₂ liquide HP (S2LL) de l'étape (C) sont retirés de la cuve de séparation de gaz-liquide de l'étage de séparation cryogénique finale de la série ; et des courants de CO₂ liquide HP supplémentaires (S2L) sont retirés de chacun des étages de séparation cryogénique précédents de la série.

12. Procédé selon l'une quelconque des revendications précédentes, dans lequel le courant de gaz de synthèse (1) est comprimé dans le système de compression à une pression manométrique dans la plage de 175 à 360 bars, de préférence de 250 à 360 bars, mieux encore de 300 à 360 bars, en particulier de 330 à 360 bars.

13. Procédé selon l'une quelconque des revendications précédentes, dans lequel le courant de gaz de synthèse (1) est comprimé dans un système de compresseurs multistades comprenant une pluralité de compresseurs (C1, C2, C3, C4) aménagés en série, dans lequel un échangeur de chaleur (E1, E2, E3, E4) est prévu après chaque compresseur de la série et dans lequel le gaz de synthèse est refroidi dans chaque échangeur de chaleur contre un réfrigérant externe choisi dans le groupe constitué de l'air, de l'eau ou d'un courant de traitement froid choisi parmi le courant de vapeur riche en H₂ formé à l'étape (C) ou le courant de vapeur riche en H₂ final issu de l'étape (D).

14. Procédé selon l'une quelconque des revendications précédentes, dans lequel le courant de produit de CO₂ liquide (14) est utilisé comme fluide d'injection pour un réservoir d'huile en injectant le CO₂ liquide dans un puits d'injection et dans le réservoir d'huile, déplaçant de la sorte les hydrocarbures vers un puits de production associé.

15. Usine de condensation de dioxyde de carbone pour séparer le dioxyde de carbone et l'hydrogène d'un courant de gaz de synthèse (1), l'usine comprenant :
(a) des moyens pour fournir un courant d'alimentation en gaz de synthèse ;
(b) un système de compression (C1, C2, C3, C4) pour comprimer le courant d'alimentation en gaz de synthèse à une pression manométrique dans la plage de 150 à 400 bars ;
(c) un système échangeur de chaleur (LNG100) pour refroidir le courant de gaz de synthèse comprimé à une température dans la plage de -15 à -55°C contre une pluralité de courants de réfrigérant internes, condensant de la sorte en partie le courant de gaz de synthèse comprimé ;
(d) une cuve de séparation de gaz-liquide (F360) pour séparer le courant de gaz de synthèse comprimé partiellement condensé en un courant de vapeur riche en hydrogène et un courant de CO₂ liquide avec une chute de pression minimale en travers de la cuve de séparation de gaz-liquide ;
(e) un système de turbo-expansion comprenant une pluralité de dispositifs de turbo-expansion (E1, E2, E3, E4) aménagés en série pour dilater le courant de vapeur riche en hydrogène séparé à des pressions de plus en plus basses, dans laquelle le système de turbo-expansion est à même de produire un courant de vapeur riche en hydrogène issu du dispositif de turbo-expansion final de la série à une pression égale ou supérieure à la pression d'alimentation en gaz combustible minimale et l'envoyer dans la chambre de combustion d'une turbine à gaz d'une centrale électrique et dans laquelle chaque dispositif de turbo-expansion de la série est à même de fournir un courant de vapeur riche en hydrogène qui est utilisée comme courant de réfrigérant interne pour le système échangeur de chaleur.
